# EUROPEAN PATENT SPECIFICATION

(11) **EP 4 086 533 B1**
(45) Date of publication and mention of the grant of the patent: **16.08.2023**
(21) Application number: 22169934.1
(22) Date of filing: 26.04.2022
(51) Int. Cl.: G01N 27/08, F24H 15/132, F24H 9/20, F24H 1/10, G01N 27/10

(54) **INSTANTANEOUS ELECTRIC WATER HEATER AND METHOD OF CONTROLLING THE INSTANTANEOUS ELECTRIC WATER HEATER**
ELEKTRISCHER DURCHLAUFERHITZER UND VERFAHREN ZUR STEUERUNG DES ELEKTRISCHEN DURCHLAUFERHITZERS
CHAUFFE-EAU ÉLECTRIQUE INSTANTANÉ ET PROCÉDÉ DE COMMANDE DU CHAUFFE-EAU ÉLECTRIQUE INSTANTANÉ

(30) Priority: 07.05.2021 SK 612021 U
(43) Date of publication of application: 09.11.2022
(73) Proprietor: Vaillant GmbH, 42859 Remscheid NRW (DE)
(72) Inventor: Hrica, Dávid, 90845 Gbely (SK); Nemcovský, Jakub, 90901 Skalica (SK); Spácil, Miroslav, 90844 Petrova Ves (SK)
(74) Representative: Popp, Carsten

(56) References cited:
- EP-B1- 2 840 404
- WO-A1-2021/044047
- DE-A1-102014 000 536
- DE-U1- 8 428 975

## Description

### Field of the invention

The invention relates to the electric water flow heater with heating by means of heating elements which are in direct contact with the heated water, equipped with means for continuous measurement of water conductivity.

### Background of the invention

In the prior state of the art, heating devices are known, in particular hot water boilers, with a primary source of water heating (gas, electric, solar, heat pump system), with a water circulation pump and with one or more heating circuits.

Electric water flow heaters are used to prepare hot water for households or other inhabited buildings using electricity.

Such a water flow heater comprises one or more electric heating elements by means of which the water passing through the channels in the water flow heater is heated to the desired adjustable temperature. Water flow heaters heat the water on demand, where the heated water is not accumulated in the water flow heater. Water flow heaters are most often equipped with a bare wire heating body, creating a heating coil.

The difference of potentials between the bare wire and the water supply channel or water drain channel connected to the ground potential in an electrically conductive manner leads to corresponding leakage of current during operation of the heating device. The extent of this leakage current depends, among other things, on the conductivity of the water flowing through the device.

Several standards are applicable to electric water heaters used in households, while safe operation is most important. Failure to comply with them may result in electric shock.

The international standard DIN EN 60335-2-21 deals with the safety of electric storage water heaters for households, where section 13.2 sets the maximum values of leakage current for electrical equipment used in households and the standard DIN EN 60335-2-35 intended for water flow heaters has in section 7.1 a table with limit values of water conductivity at operating temperature.

Because in different parts of the world the water in the distribution network is often contaminated with salt or other undesirable impurities causing an increase of water conductivity, in order to comply with safety standard it is necessary to ensure continuous assessment of water conductivity in flow heaters during operation of instantaneous electric water heater. If the limit value is exceeded, the device must take all steps necessary, such as disconnecting the heaters from the power supply.

In the state of the art, the solutions for measuring water resistance or water conductivity are known.

Publication DE8428975 U1 discloses an instantaneous electric water heater with a configuration for measuring the water conductivity and, on the basis of this value, to evaluate the water shortage caused, for example, by air bubbles. The measuring electrode is screwed into the water channel.

Depending on this measured value, the heating current of the heating coil is only switched on if the conductivity measurement shows that there is sufficient water in the flow channel of the water flow heater. The heating coil can be switched off immediately during operation in case of water leakage.

The mentioned solution does not take into account the limit values of water conductivity prescribed by the standard and thus the safety of the device operation is not ensured.

Document EP 2840404 B1 discloses a method for controlling a bare wire instantaneous electric water heater. The instantaneous electric water heater comprises a control device which comprises an evaluation unit set to determine a hypothetical value of the current leakage based on the water conductivity value and at least one predetermined value related to the construction (design) of the device. The control device is adapted to reducing the heating power of the bare wire heating device if the hypothetical value of the current leakage exceeds a predetermined threshold value of the current leakage.

The disadvantage of the control method is that the controlled value (leakage current) deviates from the measured value (conductivity value) and the fact that no measures are taken to prevent damage due to overheating of the heating element because of air bubbles. If one of the measuring electrodes is a resistance heating coil, such a connection does not allow continuous measurement, but only measurement in an idle state - without simultaneous water heating.

Document DE 102014000536 A1 discloses a measuring device for detecting an electrical conductivity of water in an electrical continuous-flow heater, comprising at least two measuring electrodes for arraging in a distance in a channel of the continuous-flow heater carrying the water, measuring electronics for providing and evaluating an electrical resistance, a transformer with a primary side and a secondary side , wherein the measuring electronics are connected to the primary side and the two measuring electrodes are connected to the secondary side.

Document WO2021/044047 A1 discloses a method for controlling an electric hot water heater, in particular an electric continuous-flow heater comprising detecting a resistance of a fluid flowing through a flow channel of the water heater by means of a measuring sensor which has two electrodes which are spaced apart from one another and reach into the flow channel, and for detecting a resistance of the fluid by applying an alternating voltage between the two electrodes and controlling the heating power of the heating element as a function of the detected resistance.

However, the continuous measurement is affected by the electromagnetic noise of the heating elements that are in operation. The prior art documents do not bring solution how to eliminate this noise and which other parameters need to be taken into account in order to measure the resistance and evaluate the conductivity as accurately as possible in order to fulfill norm requirements.

This shortcoming is solved by the presented invention of an electric water flow heater with continuous measurement of water conductivity.

### Summary of the invention

The electric water flow heater with bare wires immersed in the water comprises a cold water inlet channel, a hot water outlet channel and a water heating area arranged between the inlet channel and the outlet channel. Together they form a flow channel in which the water flows. At least one bare wire heating element is located in the water heating area.

The electric water flow heater also includes temperature sensors, usually at the inlet and the outlet, pressure sensors, throttle valves and flow restrictors controlled by a stepping motor and flow meters. The outlet sensors are used by the control unit to control the operation of the flow heater, in particular to provide the set desired outlet temperature. Based on the volume and temperature of the water in the flow heater, the control unit controls the power of the heating elements.

Two electrodes distant from each other, while the electrodes can be essentially any electrically conductive components that extend to the flow channel and a measuring device are used to measure water resistance. Measuring device is connected to the electrodes as well as to the control unit by means of connectors and/or conductors and the measuring method comprises an accurate parametric calculation of water conductivity.

It is obvious that the measuring device should operate at the lowest possible voltage that would be safe even if the DC component of the circuit is predominant in the event of a device failure. Its value should be less than 24V. However, the voltage value must be much lower, because if a copper electrode is used (for example the copper supply pipe), the electrode starts to corrode already at 0,34V DC. The use of AC voltage prevents electrolysis and allows reliable and long-term measurements.

Another problem that needs to be solved is the elimination of electromagnetic interference from the heating elements, since the heating elements are in operation during the continuous conductivity measurement. It was measured, that the interference did not have a significant impact on the measurement signal as long as the power of the heating elements did not exceed a value up to 10kW. However, the electromagnetic interference significantly affected the measurement signal when the power of the heating elements reached 27kW.

Therefore, for accurate measurements for a wide range of devices with different power outputs, a resistor was connected in parallel to the electrodes to eliminate electromagnetic interference from the heating elements.

By testing the measuring device and comparing the measured values with an accurate multi-parameter water quality measuring instrument, the frequency value and voltage magnitude for the best signal-to-noise ratio were determined.

The measuring device according to the invention generates an alternating voltage of 0,5V - 1,0V and a frequency of 8 - 12kHz, which is fed between the electrodes by means of the connected conductors. The use of alternating voltage prevents electrolysis and enables reliable and long-term measurement. A resistor of size 0,5-2 kΩ is connected in parallel to the electrodes to eliminate electromagnetic interference from the heating elements, as the heating elements are in operation during continuous conductivity measurement.

The measuring device is connected to the control unit by means of a four-pin connector (GND, + 5V and two feedback wires) and the DC voltage from 0V to 5V transmitted from the measuring device to the control unit corresponds to the converted value of the measured instantaneous resistance. In the control unit, the transmitted voltage is converted to the instantaneous value of water conductivity, while the parameters of the function for determining the coefficient for water conductivity are: the specific resistance of the metal tube connected to the inlet or outlet channel; the distance between the measuring electrodes; the instantaneous value of the heated water temperature; the size of the contact surface of the electrodes, which is in direct contact with water; and the value of the resistance of the resistor connected in parallel.

Air bubbles in the flow channel are detected so that the measuring device measures the resistance between the electrodes equal to the resistance of the resistor connected in parallel to eliminate electromagnetic interference, which will correspond to the value of instantaneous water conductivity evaluated by the control unit.

In both cases - when the water conductivity limit value is exceeded as well as when air bubbles are detected, the control unit switches off the water heating, regardless of whether the hot water has been supplied. The heating elements are disconnected from the power supply to protect the user from injury or the heater from damage.

Water is repeatedly heated when the instantaneous water conductivity value does not exceed the limit values stored in the memory circuits of the instantaneous electric water heater control unit and used by its control software and no air bubbles are detected in the flow channel.

### Brief description of drawings

The invention will be described with reference to, but not limited to, the following figures:
Fig. 1 shows a flow channel of an instantaneous electric water heater with a heated water temperature sensor
Fig. 2 shows an example of an electrode by which a metal tube is led to the inlet channel of an instantaneous electric water heater
Fig. 3 shows an example of the connection of a flow channel to a measuring device and to a control unit in an instantaneous electric water heater in a simplified block diagram
Fig. 4 shows a graph comparing the water conductivity measured by an accurate multi-parameter water quality meter with the water conductivity values calculated by the control unit

### Description of the embodiment example

The instantaneous electric water heater 100 for water heating with bare wires immersed in water comprises a cold water inlet channel 1, a heated water outlet channel 2 and a water heating area 3 arranged between the inlet channel 1 and the outlet channel 2, while the inlet channel 1, the outlet channel 2 and the water heating area 3 form a flow channel 4.

At least one heating element 10 with bare wires immersed in water is arranged in the water heating area 3.

The temperature of the heated water in the outlet channel 2 is continuously measured by means of a temperature sensor 5 for the purpose of controlling the output of the instantaneous electric water heater 100, while the water temperature in the inlet channel 1 can also be measured in the instantaneous electric water heater 100 by another sensor (not shown).

The control unit 9 uses the data from the sensors to control the heating power of the heating elements 10, while also other data are entering the control algorithms in addition to the stated instantaneous temperature value measured by the temperature sensor 5, such as, for example, the flow meter values (not shown) and the desired outlet water temperature value.

As the heated water temperature sensor 5 is a common part of any flow heater, it is very advantageous to use a metal sensor cover, which is in direct contact with water in the outlet channel 2 as the first electrode 20 for measuring the water conductivity. The metal cover of the sensor can be made of any electrically conductive material; the most common materials are copper, brass, steel or aluminum. It is a condition that all active elements and measuring conductors of the temperature sensor 5 are insulated from the metal cover of the sensor 5 by an electrically non-conductive material.

The second measuring electrode 30 can preferably be a metal tube connected to the inlet channel 1 or a metal tube connected to the outlet channel 2, while the metal tube is grounded - according to regulations - to the common ground of the device (GND).

Metal tubes are mostly copper, but also other metal materials can be used and their use as electrodes for measuring water conductivity is advantageous because they have direct contact with water, the electrical resistance of the materials from which they are made is known, and they are a part of the device.

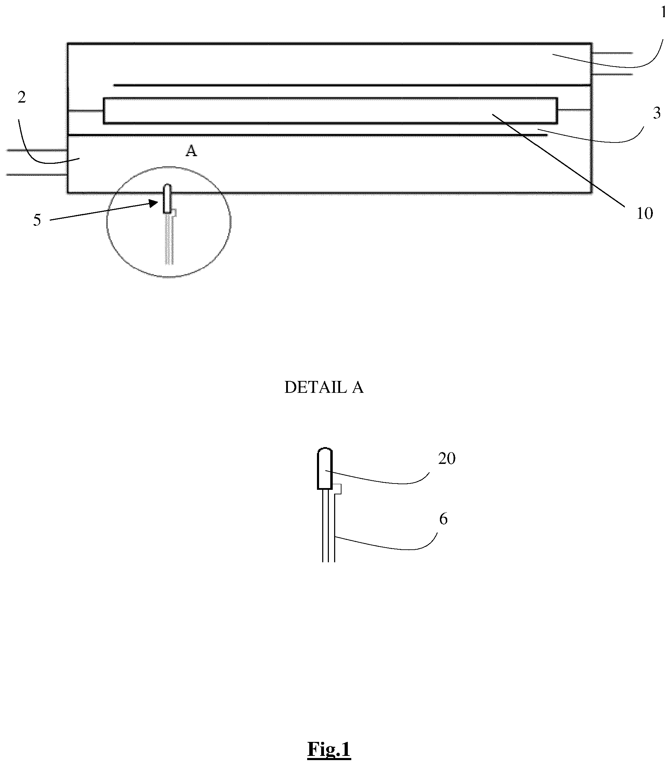

Fig. 1 schematically shows the flow channel of an instantaneous electric water heater with a heated water temperature sensor 5, while the use of the metal sensor cover as the first electrode 20 with the connected measuring conductor 6 is shown in detail.

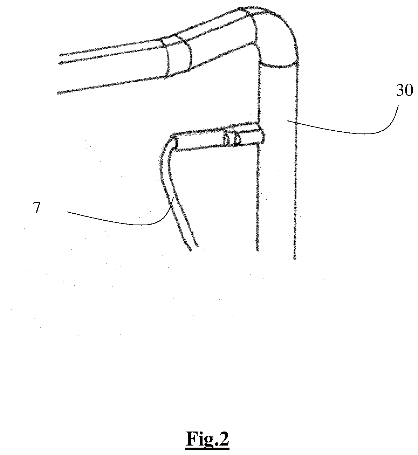

Fig. 2 shows an example of the second electrode 30, by which a metal tube is led to the inlet channel of an instantaneous electric water heater with a measuring conductor 7.

The measuring device 8 for continuous water resistance measurement is connected to the measuring electrodes 20 and 30 by means of conductors 6 and 7.

The conductors 6 and 7 are connected in parallel to a resistor 50 with a resistance of 1 kSZ to eliminate electromagnetic interference from the heating elements 10 during the continuous measurement of water resistance.

For continuous measurement of the instantaneous water resistance by means of the measuring device 8, an alternating voltage of 0,7 V and a frequency of 10 kHz is connected between the conductors 6 and 7.

In the embodiment example, the measuring device 8 is connected to the control unit 9 by means of a four-pin connector 40 (GND, + 5V and two conductors for feedback).

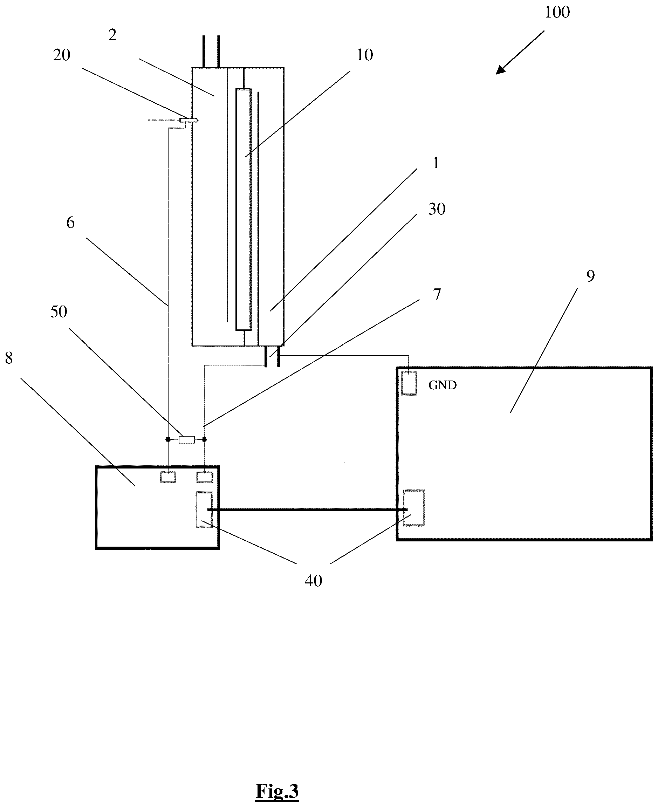

Fig. 3 shows an example of the connection of the flow channel with the measuring device and with the control unit in the instantaneous electric water heater in the simplified block illustration.

Advantageously, the measuring device 8 can be a part of the control unit 9.

DC voltage from 0V to 5V supplied from the measuring device 8 to the control unit 9 corresponds to the converted value of the measured instantaneous water resistance. In the control unit 9, the transmitted voltage is converted by a coefficient to the instantaneous value of water conductivity, while the parameters of the function for determining the coefficient for water conductivity are: the specific resistance of the metal tube material used as the second electrode 30; the distance between the measuring electrodes 20 and 30, the instantaneous value of the heated water temperature; the extent of the contact surface of the electrodes, which is in direct contact with the water; and the value of the resistance of the resistor 50 connected in parallel.

The control unit 9 receives accurate water conductivity information on water conductivity at the measured operating temperature by means of the described circuit and the conversion software, and the device is able to respond to water quality fluctuation in accordance with international and national safety standards.

When the water conductivity limit is exceeded, the control unit interrupts the power supply to the heating elements 10.

Air bubbles in the flow channel are detected so that the measuring device measures resistance between the electrodes equal to the resistance of the resistor 50 connected in parallel. If the control unit 9 evaluates the value of the water conductivity detecting the presence of air bubbles in the flow channel 4, even in this case the control unit interrupts the power supply to the heating elements 10.

In both cases, the instantaneous electric water heater may generate a warning signal to the user, or an error message may be displayed on the heater display unit.

The water is repeatedly heated if the instantaneous value of water conductivity does not exceed the limit values stored in the memory circuits of the electric heater control unit and if the instantaneous value of water conductivity does not indicate air bubbles in the flow channel.

The resistor 50 may have a resistance value of 0,5-2kΩ, preferably 1kΩ, AC voltage is 0,5V - 1,0V and frequency is 8-12 KHz, preferably voltage of 0,7V and frequency of 10 kHz.

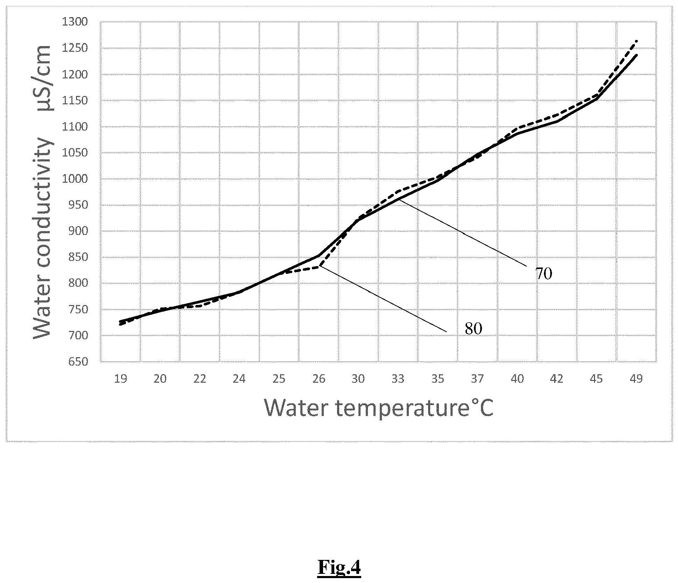

Testing verified that the described water conductivity measurement is very accurate. Fig. 4 shows a graph comparing the water conductivity measured by an accurate multi-parameter water quality meter with water conductivity values calculated by control unit, while the measurement deviation is less than 5%.

### Industrial applicability

The requirement for safe operation of the instantaneous electric water heater with heating by means of bare heating elements, which are in direct contact with the heated water, leads to the necessary modifications to the equipment used so far. The presented technical solution is equipped with means for continuous measurement of water conductivity and protection against electric shock due to water contamination with minimal costs, as it uses common equipment components and simple measuring circuit.

### List of reference marks

1 - inlet channel
2 - outlet channel
3 - heating area
4 - flow channel
5 - temperature sensor
6, 7 - conductors
8 - measuring device
9 - control unit
10 - heating element
20 - first electrode
30 - second electrode
40 - connector
50 - resistor
70 - graph showing dependence of water conductivity on water temperature with values measured by a multi-parameter measuring device
80 - graph showing dependence of water conductivity on water temperature with values measured by a flow heater
100 - instantaneous electric water heater

## Claims

1. An instantaneous electric water heater (100) for heating water by means of bare wires immersed in water, comprising
a cold water inlet channel (1), a hot water outlet channel (2) and a water heating area (3) arranged between the inlet channel (1) and the outlet channel (2), while the inlet channel (1), the outlet channel (2) and the water heating area (3) form a flow channel (4),
at least one heating element (10) arranged in the water heating area (3),
at least one sensor (5) for measuring the heated water temperature,
a control unit (9) for controlling the heating power of the heating elements (10), two separated measuring electrodes (20, 30) extending to the flow channel (4) and having direct contact with water in the flow channel (4),
a measuring device (8) for continuously measuring the resistance of the water flowing through the flow channel (4),
the measuring device (8) is connected to the measuring electrodes (20, 30) by means of conductors (6, 7) and the measuring device (8) is connected to the control unit (9),
**characterized in that**
the conductors (6, 7) are connected in parallel with a resistor (50) with a resistance value of 0,5-2 kQ, preferably 1 kQ, to eliminate electromagnetic interference from the heating elements (10),
the measuring device (8) is designed so that it continuously measures the instantaneous resistance between the conductors (6, 7) using an alternating voltage of magnitude 0,5 V - 1,0 V and a frequency of 8 - 12 kHz, preferably a voltage of magnitude 0,7 V and a frequency of magnitude 10 kHz.

2. The instantaneous electric water heater (100) according to claim 1,
**characterized in that** the first measuring electrode (20) is formed by a metal casing of the water temperature sensor (5), the second measuring electrode (30) is formed by a metal tube connected to the inlet channel (1) or a metal tube connected to the outlet channel (2), while the second measuring electrode is grounded.

3. Method of controlling the instantaneous electric water heater (100) according to claim 1 or 2, comprising the steps:
a) connecting an AC voltage of magnitude 0,5V - 1,0V and frequency 8-12 kHz, preferably of magnitude 0,7 V and frequency 10 kHz between conductors (6, 7),
b) conversion of the measured resistance value to a DC voltage of magnitude from 0V to 5V and its transmission to the control unit (9)
c) conversion of the transmitted voltage to the value of the conductivity of the water in the control unit (9)

4. Method of controlling the instantaneous electric water heater (100) according to claim 3, **characterized in that**
step c) is the conversion of the transmitted voltage value from the measuring device (8) to the value of the conductivity using a parametrically determined coefficient, wherein the parameters of the function for determining the coefficient are:
the material resistivity of the metal tube material connected to the input channel (1) or to the output channel (2),
the distance between the measuring electrodes (20, 30),
the measured value of the temperature of the heated water,
the size of the contact area of the electrodes in direct contact with the water
the value of the resistance of the resistor (50).

5. Method of controlling the instantaneous electric water heater (100) according to any one of the preceding claims, **characterized in that,** when the water conductivity value exceeds the specified water conductivity limit in the flow channel (4), the control unit (9) interrupts the power supply to the heating elements (10).

6. Method of controlling the instantaneous electric water heater (100) according to any one of the preceding claims, **characterized in that,** when the water conductivity value detects the presence of air bubbles in the flow channel (4), the control unit (9) interrupts the power supply to the heating elements (10).

## Patentansprüche

1. Elektrischer Durchlauferhitzer (100) zum Erwärmen von Wasser mittels in Wasser eingetauchter Blankdrähte, umfassend
einen Kaltwassereinlasskanal (1), einen Heißwasserauslasskanal (2) und einen Wassererwärmungsbereich (3), der zwischen dem Einlasskanal (1) und dem Auslasskanal (2) angeordnet ist, wobei der Einlasskanal (1), der Auslasskanal (2) und der Wassererwärmungsbereich (3) einen Strömungskanal (4) bilden,
mindestens ein im Wassererwärmungsbereich (3) angeordnetes Heizelement (10),
mindestens einen Sensor (5) zur Messung der Temperatur von erwärmtem Wasser,
eine Steuereinheit (9) zum Steuern der Heizleistung der Heizelemente (10), zwei getrennte Messelektroden (20, 30), die sich zum Strömungskanal (4) erstrecken und direkten Kontakt mit dem Wasser im Strömungskanal (4) aufweisen,
eine Messvorrichtung (8) zur kontinuierlichen Messung des Widerstands des durch den Strömungskanal (4) strömenden Wassers,
wobei die Messvorrichtung (8) über Leiter (6, 7) mit den Messelektroden (20, 30) verbunden ist und die Messvorrichtung (8) mit der Steuereinheit (9) verbunden ist,
**dadurch gekennzeichnet, dass** die Leiter (6, 7) parallel mit einem Widerstand (50) mit einem Widerstandswert von 0,5-2 kΩ, bevorzugt 1 kΩ, verbunden sind, um elektromagnetische Störungen von den Heizelementen (10) zu eliminieren,
die Messvorrichtung (8) so ausgelegt ist, dass sie den momentanen Widerstand zwischen den Leitern (6, 7) unter Verwendung einer Wechselspannung der Größe 0,5 V-1,0 V und einer Frequenz von 8-12 kHz, bevorzugt einer Spannung der Größe 0,7 V und einer Frequenz der Größe 10 kHz, kontinuierlich misst.

2. Elektrischer Durchlauferhitzer (100) nach Anspruch 1,
**dadurch gekennzeichnet, dass** die erste Messelektrode (20) durch ein Metallgehäuse des Wassertemperatursensors (5) gebildet wird, die zweite Messelektrode (30) durch ein Metallrohr gebildet wird, das mit dem Einlasskanal (1) oder einem Metallrohr verbunden ist, das mit dem Auslasskanal (2) verbunden ist, wobei die zweite Messelektrode geerdet ist.

3. Verfahren zum Steuern des elektrischen Durchlauferhitzers (100) nach Anspruch 1 oder 2, umfassend die Schritte:
a) Anschließen einer Wechselspannung der Größe 0,5 V-1,0 V und der Frequenz 8-12 kHz, bevorzugt der Größe 0,7 V und der Frequenz 10 kHz zwischen den Leitern (6, 7),
b) Umwandlung des gemessenen Widerstandswertes in eine Gleichspannung der Größe von 0 V bis 5 V und deren Übertragung an die Steuereinheit (9)
c) Umwandlung der übertragenen Spannung in den Wert der Leitfähigkeit des Wassers in der Steuereinheit (9)

4. Verfahren zur Steuerung des elektrischen Durchlauferhitzers (100) nach Anspruch 3, **dadurch gekennzeichnet, dass**
Schritt c) die Umwandlung des von der Messvorrichtung (8) übertragenen Spannungswertes in den Wert der Leitfähigkeit unter Verwendung eines parametrisch bestimmten Koeffizienten ist, wobei die Parameter der Funktion zur Bestimmung des Koeffizienten folgende sind:
der Materialwiderstand des mit dem Eingangskanal (1) oder dem Ausgangskanal (2) verbundenen Metallrohrmaterials,
der Abstand zwischen den Messelektroden (20, 30),
der gemessene Wert der Temperatur des erwärmten Wassers,
die Größe der Kontaktfläche der Elektroden in direktem Kontakt mit dem Wasser
der Widerstandswert des Widerstands (50).

5. Verfahren zur Steuerung des elektrischen Durchlauferhitzers (100) nach einem der vorstehenden Ansprüche, **dadurch gekennzeichnet, dass** die Steuereinheit (9) die Leistungsversorgung der Heizelemente (10) unterbricht, wenn der Wasserleitfähigkeitswert die festgelegte Wasserleitfähigkeitsgrenze im Strömungskanal (4) überschreitet.

6. Verfahren zur Steuerung des elektrischen Durchlauferhitzers (100) nach einem der vorstehenden Ansprüche, **dadurch gekennzeichnet, dass** die Steuereinheit (9) die Leistungsversorgung der Heizelemente (10) unterbricht, wenn der Wasserleitfähigkeitswert die Anwesenheit von Luftblasen im Strömungskanal (4) erkennt.

## Revendications

1. Chauffe-eau électrique instantané (100) pour chauffer de l'eau au moyen de fils nus immergés dans l'eau, comprenant
un canal d'entrée d'eau froide (1), un canal de sortie d'eau chaude (2) et une zone de chauffage d'eau (3) agencée entre le canal d'entrée (1) et le canal de sortie (2), tandis que le canal d'entrée (1), le canal de sortie (2) et la zone de chauffage d'eau (3) forment un canal d'écoulement (4),
au moins un élément chauffant (10) agencé dans la zone de chauffage d'eau (3),
au moins un capteur (5) pour mesurer la température de l'eau chauffée,
une unité de commande (9) pour commander la puissance de chauffage des éléments chauffants (10), deux électrodes de mesure (20, 30) séparées s'étendant jusqu'au canal d'écoulement (4) et présentant un contact direct avec l'eau dans le canal d'écoulement (4),
un dispositif de mesure (8) pour mesurer en continu la résistance de l'eau s'écoulant à travers le canal d'écoulement (4),
le dispositif de mesure (8) est relié aux électrodes de mesure (20, 30) au moyen de conducteurs (6, 7) et le dispositif de mesure (8) est relié à l'unité de commande (9),
**caractérisé en ce que** les conducteurs (6, 7) sont reliés en parallèle à une résistance (50) avec une valeur de résistance de 0,5-2 kΩ, de préférence 1 kΩ, pour éliminer les interférences électromagnétiques des éléments chauffants (10),
le dispositif de mesure (8) est conçu de manière à mesurer en continu la résistance instantanée entre les conducteurs (6, 7) en utilisant une tension alternative d'amplitude 0,5 V - 1,0 V et une fréquence de 8 - 12 kHz, de préférence une tension d'amplitude 0,7 V et une fréquence d'amplitude 10 kHz.

2. Chauffe-eau électrique instantané (100) selon la revendication 1,
**caractérisé en ce que** la première électrode de mesure (20) est formée par une enveloppe métallique du capteur de température d'eau (5), la deuxième électrode de mesure (30) est formée par un tube métallique relié au canal d'entrée (1) ou un tube métallique relié au canal de sortie (2), tandis que la deuxième électrode de mesure est mise à la terre.

3. Procédé de commande du chauffe-eau électrique instantané (100) selon la revendication 1 ou 2, comprenant les étapes consistant à :
a) relier une tension alternative d'amplitude de 0,5 V à 1,0 V et de fréquence de 8 à 12 kHz, de préférence d'amplitude de 0,7 V et de fréquence de 10 kHz entre des conducteurs (6, 7),
b) convertir la valeur de résistance mesurée en une tension continue d'amplitude de 0 V à 5 V et la transmettre à l'unité de commande (9)
c) convertir la tension transmise à la valeur de la conductivité de l'eau dans l'unité de commande (9)

4. Procédé de commande du chauffe-eau électrique instantané (100) selon la revendication 3, **caractérisé en ce que**
l'étape c) est la conversion de la valeur de tension transmise par le dispositif de mesure (8) en la valeur de la conductivité à l'aide d'un coefficient déterminé paramétriquement, dans lequel les paramètres de la fonction de détermination du coefficient sont :
la résistivité du matériau du tube métallique relié au canal d'entrée (1) ou au canal de sortie (2),
la distance entre les électrodes de mesure (20, 30),
la valeur mesurée de la température de l'eau chauffée,
la taille de la surface de contact des électrodes en contact direct avec l'eau
la valeur de la résistance de la résistance (50).

5. Procédé de commande du chauffe-eau électrique instantané (100) selon l'une quelconque des revendications précédentes, **caractérisé en ce que,** lorsque la valeur de conductivité de l'eau dépasse la limite de conductivité de l'eau spécifiée dans le canal d'écoulement (4), l'unité de commande (9) interrompt l'alimentation des éléments chauffants (10).

6. Procédé de commande du chauffe-eau électrique instantané (100) selon l'une quelconque des revendications précédentes, **caractérisé en ce que,** lorsque la valeur de conductivité de l'eau détecte la présence de bulles d'air dans le canal d'écoulement (4), l'unité de commande (9) interrompt l'alimentation des éléments chauffants (10).
